# EUROPEAN PATENT SPECIFICATION

(11) **EP 1 494 209 B1**
(45) Date of publication and mention of the grant of the patent: **05.09.2007**
(21) Application number: 03014855.5
(22) Date of filing: 30.06.2003
(51) Int. Cl.: G10L 15/24, G06F 3/02

(54) **Acoustically and haptically operated apparatus and method thereof**
Akustisch und haptisch betätigte Vorrichtung und zugehöriges Verfahren
Appareil actionné par voie acoustique et haptique et méthode associée

(43) Date of publication of application: 05.01.2005
(73) Proprietor: Harman Becker Automotive Systems GmbH, 76307 Karlsbad (DE)
(72) Inventor: Jeschke, Bärbel, 89173 Lonsee (DE)
(74) Representative: Grünecker, Kinkeldey, Stockmair & Schwanhäusser Anwaltssozietät

(56) References cited:
- EP-A- 1 041 362
- WO-A-95/25326
- US-A- 5 677 993
- JOHNSTON ET AL: "Unification-based Multimodal Integration" PROCEEDINGS OF THE 35TH ANNUAL MEETING OF THE ASSOCIATION FOR COMPUTIONAL LINGUISTICS, MADRID, SPAIN, 1997, XP002262199
- MARRENBACH J ET AL: "Development and multimodal operation of a multimedia car instruction manual" 8TH IFAC/IFIP/IFORS/IEA SYMPOSIUM ON ANALYSIS, DESIGN, AND EVALUATION OF HUMAN-MACHINE SYSTEMS. PREPRINTS, PROCEEDINGS OF SYMPOSIUM ON ANALYSIS, DESIGN & EVALUATION OF HUMAN-MACHINE SYSTEMS (HMS 2001), KASSEL, GERMANY, 18-20 SEPT. 2001, pages 47-51, XP002262200 2001, Dusseldorf, Germany, VDI/VDE-Gesellschaft Mess-und Automatisierungstechnik, Germany

## Description

This invention is directed to an acoustically operated apparatus, more particularly, to an apparatus being operated by an input of a sequence of characters comprising a means for acoustic input and a means for haptic input and to a method for operating a corresponding apparatus.

More and more devices of daily life offer the possibility of speech operation. In other words, these devices can be operated by speaking suitable commands that are processed by the device, whereupon the device performs a corresponding action. In speech operated devices, not only commands in the narrow sense, but also parameters required for the operation of the device, can be input in this way.

The input command or parameter has the form of a sequence of characters, wherein the term "character" comprises letters, numbers (digits) and special characters. For example, a speech operated TV can be switched on or off by speaking the words "on" or "off." A desired television channel can be chosen by speaking its channel number, the name of the television station, or by changing the channels via the command "up", "down", or "next", "previous."

Speech operated devices are particularly useful in an environment where the user needs his hands for other actions. Thus, speech operated devices are especially useful in a vehicular cabin. In a car, the driver needs his hands for shifting gears and driving. In order to reduce the danger of accidents, more and more car manufacturers provide speech operated components, such as car navigation systems, cellular phones, car radios or CD players. By default, however, these prior art devices are still operated by hand, i.e., by pressing corresponding keys. If a user wishes to operate a device by speech, he actuates a so-called "push to talk" (PTT) key (or lever), whereupon he may input a command by speech. After pressing the PTT key, the system switches into the speech mode and awaits a speech command.

EP 1 041 362 discloses an input system for a driver information system wherein letters and/or numbers can be input via speed input or via keys.

It is a drawback of these prior art systems that their control and manipulation is still complicated and not sufficiently comfortable. In particular, if the system is in the speech mode, but does not "understand" a command which may be due to several reasons (e.g., insufficient vocabulary of the system, high noise level), the user has to break off, return to the corresponding command level in the default mode, and repeat the command via key input. Particularly in the case of more complicated commands consisting of a longer sequence of characters, this is a severe disadvantage.

Therefore, it is the problem underlying the invention to provide an apparatus being operated by an input of a sequence of characters that provides a higher flexibility and simplified, more comfortable operation.

This problem is solved by an apparatus according to claim 1 and a method for operating an apparatus according to claim 9. Accordingly, an apparatus being operated by an input of a sequence of characters is provided comprising a means for acoustic input and a means for haptic input, wherein the means for acoustic input and the means for haptic input are activateable in parallel such that each character can be input acoustically or haptically.

Since both the means for acoustic input and the means for haptic input are activateable in parallel, during input of a command, the user may change the input channel (speech and haptic). Independent of the way of input of a character, the following character can be input acoustically or haptically. In this way, the dialogue with the apparatus is rendered highly flexible. This is particularly useful, for example, if during speech input of a command or sequence of characters, the input is made more difficult, e.g., due to an increased noise level; then the user may simply continue with a haptic input of the rest of the sequence of characters. On the other hand, when inputting a sequence of characters haptically, the user can speak parts of the sequence in order to accelerate the input, for example, if specific words are part of the apparatus vocabulary.

According to a preferred embodiment, the means for acoustic input can comprise a microphone and the means for haptic input can comprise a key means. Preferably, the microphone may be a directional microphone and/or part of a whole microphone array. This improves the comprehensibility or audibility and also the signal-to-noise ratio.

The key means can be a standard keyboard, for example, as used with standard computers or cellular phones. The term "key" is not to be understood in the narrow sense, but can also comprise a lever or a touch pad, for example.

Preferably, the apparatus can comprise a means for converting an acoustic input and a haptic input into a common format. Then, the different parts of the input (acoustic and haptic) can be composed directly to obtain the whole sequence of characters and, thus, the complete command and/or the set of parameters required for operation of the apparatus. The converting means can have the form of a smart interface.

According to a preferred embodiment, the apparatus further comprises a decision means to decide whether a character was input acoustically or haptically. This is particularly useful in the case where a character is input simultaneously or almost simultaneously via the acoustic means and the haptic input means. In this case, the decision means has to decide whether the character was actually input once or twice. This also applies in the case where two different characters, one being input haptically and the other acoustically, are input simultaneously or almost simultaneously. If, for example, an acoustic input and a haptic input are simultaneous (e.g., the time difference between both inputs is less than a predetermined value), the decision means, on the one hand, can decide which input channel has a higher priority and, on the other hand, whether the user is asked to repeat the input.

According to an advantageous embodiment of all previously described apparatus, the apparatus can further comprise a means for output of an acoustic and/or visual signal, particularly comprising a sequence of characters. Such an output, for example, can comprise a confirmation, information or question to a user. In the simplest case, the output can be a signal tone or signal lamp indicating that both means for acoustic and haptic input are activated or that an action has been performed. The user can also be provided with a list of possible commands or he can be asked to repeat the last sequence or sub-sequence of characters.

Preferably, the apparatus can further comprise a means for acoustically and/or visually reproducing a previously input sequence of characters. This is to confirm to the user that which was previously input, for example, by repeating an input telephone number before dialing.

According to a preferred embodiment of all previously described apparatus, the apparatus can comprise a speech recognition means. The speech recognition means can comprise means to further enhance the speech signal, for example, noise reduction means or echo cancellation means.

Preferably, the apparatus can be an electronic device or a control unit for controlling a plurality of electronic devices. Thus, in a vehicular environment, the apparatus can be or can be part of, for example, a car radio, a cellular phone, a car navigation system, or an air conditioning unit. The apparatus can also be part of a control unit controlling some or all of the previously mentioned examples of electronic devices.

The invention further provides the a vehicle, particularly a car, comprising one of the previously described apparatus.

Furthermore, a method is provided for operating an apparatus, wherein the apparatus comprises a means for acoustic input and a means for haptic input, comprising the steps of:
- activating in parallel the means for acoustic input and the means for haptic input, and
- inputting a sequence of characters wherein each character is input acoustically or haptically.

As already explained above, this method allows a higher flexibility and an increase in operating convenience, since each character can be input via both channels independent of the input channel of the other characters, as both input means are active in parallel.

Advantageously, the method can further comprise the step of deciding whether a character was input acoustically or haptically. This reduces the error susceptibility in cases two characters are input simultaneously or almost simultaneously.

According to a preferred embodiment, the method may further comprise the step of converting the acoustic input and the haptic input into a common format. In this way, a further processing of the input sequence of characters is simplified.

Preferably, the previously described methods can further comprise the step of outputting an acoustic and/or visual signal, particularly comprising a sequence of characters. In this way, a "dialogue" between the apparatus and the user is enabled.

The invention also provides a computer program product directly loadable into the internal memory of a digital computer, comprising software code portions for performing the steps of one of the previously described methods.

Furthermore, the invention provides a computer program product stored on a medium readable by a digital computer, comprising computer readable program means for causing a computer to perform the steps of one of the previously described methods.

It is to be understood that with both the apparatus and the method previously described, the acoustic and the haptic input means are not always to be activated in parallel when a sequence of characters is to be input. For example, the haptic input means can be activated by default; the acoustic input means can be activated additionally (e.g., by pressing a PTT key) in parallel, if explicitly required.

Further, the features and advantages of the present invention will be described with reference to the drawings.
- Figure 1: depicts an embodiment of the apparatus of the present invention;
- Figure 2: is a flow diagram illustrating the functioning of an apparatus according to the present invention; and
- Figure 3: is a flow diagram illustrating the processing of a sequence of characters according to the present invention.

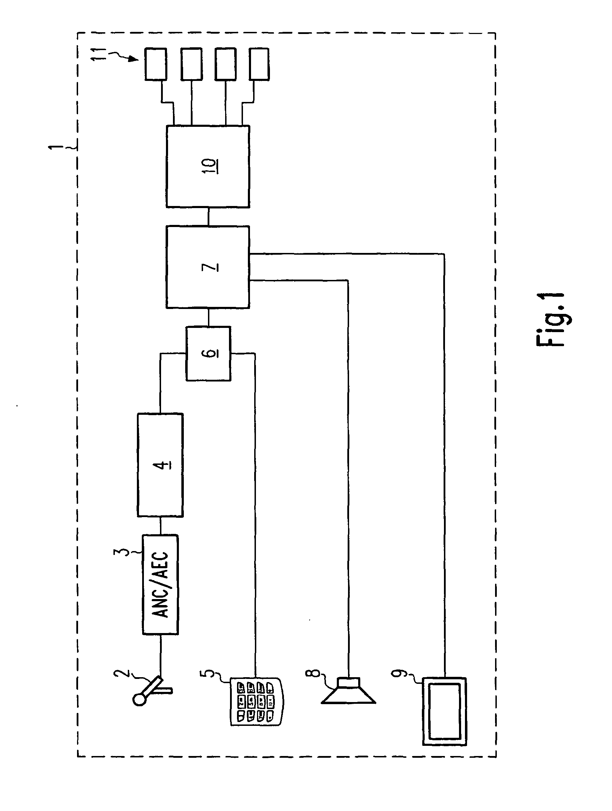

Figure 1 shows an embodiment of an apparatus 1 in accordance with the present invention. Apparatus 1 is indicated by a dashed line. This dashed line, however, does not imply any specific form or arrangement of the apparatus. In particular, this representation neither implies that the different elements of the apparatus are fixedly joined together, nor that they are arranged in a specific way.

Apparatus 1 comprises a microphone 2 that is a means for acoustic input. A signal recorded by microphone 2 is passed through an optional signal enhancement means 3. This means may comprise different types of filters, an adaptive noise canceller (ANC) and/or an acoustic echo canceller (AEC). In this way, the quality of the signal can be improved and the signal-to-noise ratio increased. This is particularly useful for a vehicular environment with a relatively high ambient noise, for example, engine noise, noise from the outside and/or noise stemming from the car radio.

The signal enhancement means is followed by a speech recognition means 4. It serves for recognition of single characters and/or whole words. The speech recognition mechanism may be based on a Hidden-Markov-Model or on a neural network, for example.

A haptic input means is given by the keyboard 5. In the figure, it is depicted as a telephone keyboard. It is to be understood, however, that any type of keyboard comprising one or several keys or levers can be used.

Apparatus 1 further comprises a smart interface 6 where both channels (from the microphone and the keyboard) are led together. At this interface, a coherent sequence of characters can be formed. Depending on the type of format in which the characters coming from the keyboard and the speech recognition means are presented to the interface 6, the interface may also comprise a converter means to convert the signals into a common format, for example, into the ASCII format.

The sequence of characters is then presented to a processor 7, preferably a DSP. The processor 7 then verifies whether the sequence of characters is admissible, for example, if it represents a known command. The processor can also be responsible to enter into a dialogue with the user. Such a dialogue can be carried out visually and/or acoustically. For this, the apparatus further comprises a loudspeaker 8 and a display 9. A typical dialogue will be presented below.

The processor 7 is arranged in interaction with a control unit 10. The control unit serves for controlling different electronic devices according to the sequence of characters input acoustically or haptically. Via this sequence of characters, a specific electronic device can be chosen, parameters can be changed or adjusted and other actions performed.

The different electronic devices are designated by the reference numeral 11, representing, for example, a car radio, CD player, mobile phone, car navigation system, air conditioning system and so on.

A typical dialogue between the system and a user could be as follows. First of all, the user activates the apparatus such that both the means for acoustic input and the means for haptic input are active. For example, the keyboard can be already activated and the acoustic input means is activated in parallel by pressing the PTT key or by speaking a predetermined starting command that is recognized by the apparatus.

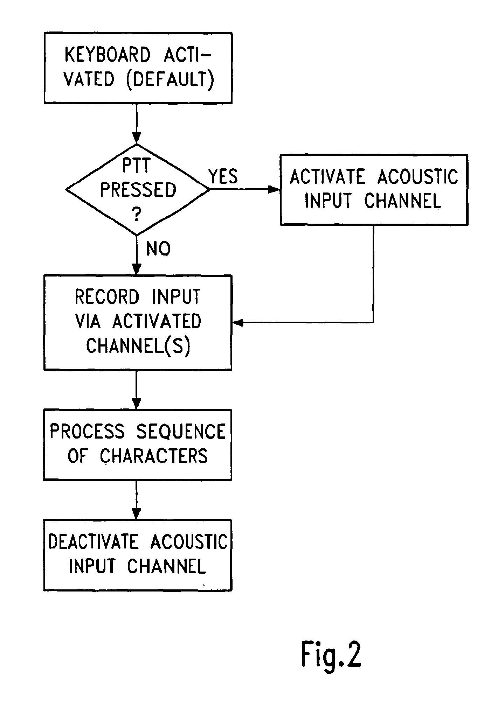

A corresponding flow diagram is shown in Figure 2. At the beginning, the apparatus is in a default mode 12 with only the keyboard being activated. Of course, the default mode can also be chosen such that the speech recognition channel instead of the keyboard is activated. In a noisy environment, as in a car, however, the first alternative is preferred. In case a corresponding command is input (acoustically or haptically), the other input channel is also activated, that is, in the preferred alternative for a car environment, the speech recognition means and the corresponding elements, such as the microphone, filters and speech enhancement means.

Then, the user may enter a sequence of characters haptically or acoustically. In the latter case, the user may spell each character explicitly or input words (a sequence or string of characters) as a whole. Thereafter, the sequence of characters is processed, which results in a dialogue with the user and/or a control of any electronic device. At the end, the acoustic input channel can be deactivated again.

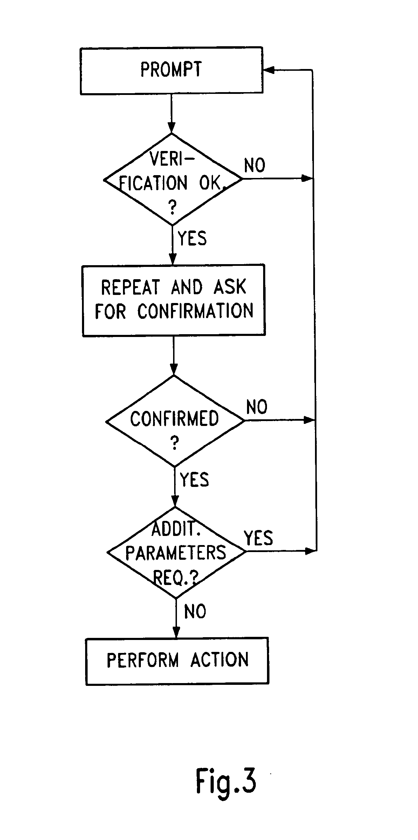

The flow diagram in Figure 3 represents an example of the steps performed during a dialogue between the apparatus and a user. At the beginning, the apparatus prompts the user to enter a command. After the input, the apparatus verifies whether the input is recognized and/or whether it is admissible. The term "recognize" refers to the acoustic input channel, i.e., the system determines whether the input (individual characters or words) could be identified. An input is admissible if it represents a command or a parameter that can be used or processed by the apparatus at the present level. For example, at a level where the user can only choose between the car radio, navigation system or mobile phone, the command "dial" may be non-admissible. If a non-admissible sequence of characters is identified, the apparatus can prompt the user to enter a different command. It can also list all possible commands at the present level or jump to another level that was recognized by the apparatus as belonging to the command entered by the user.

If the sequence of characters was recognized and admissible, however, the apparatus may repeat the sequence of characters visually and/or acoustically and possibly prompt the user for confirmation. The confirmation of the user may be an explicit command or silence (meaning a lack of protest).

If the user confirms or does not protest, the apparatus proceeds to the next step where it determines whether additional parameters are required to perform an action corresponding to the sequence of characters input by the user. If additional parameters are required, the apparatus prompts the user to enter these additional parameters. Otherwise, the desired action is performed.

An example of a dialogue between the apparatus and the user could be as follows. It is assumed that both the acoustic and the haptic input means are alreadactivated.

| | |
|---|---|
| Apparatus | "Welcome. How can I help you?" |
| User (acoustically) | "Radio" |
| Apparatus (acoustically and visually) | "Which radio station?" |
| User (acoustically) | "Bayern 4." |
| System (acoustically and visually) | "Searching Bayern 4." |
| System (acoustically and visually) | "You are listening to Bayern 4." |
| User (acoustically) | "Telephone call." |
| System (acoustically and visually) | "Please enter your PIN number." |
| User (haptically) | "1234" |

| System (after verification of the PIN number) | |
|---|---|
| (acoustically and visually) | "The PIN number is correct. Please enter a telephone number. |
| User (acoustically) | "0173" |
| User (haptically) | "1234" |
| User (acoustically) | "6789" |
| System (visually and acoustically) | "The telephone number is 017312346789. Is this correct?" |
| User | Presses a dial key. |
| Apparatus | Dials the telephone number. |
| User | Deactivates the acoustic input means. |

This dialogue and also the embodiments and examples described with reference to the figures represent only illustrations of the invention. It is to be understood that the features described above can also be combined in different ways.

## Claims

1. Apparatus being operated by an input of a sequence of characters comprising a means for acoustic input and a means for haptic input the means for acoustic input and the means for haptic input are activateable in parallel such that each character can be input acoustically or haptically,
**characterized in that**
the apparatus is configured to be operated by a simultaneous input of characters by the means for acoustic input and the means for haptic input and
that a decision means is provided that is configured to decide whether each of the simultaneously input characters was input acoustically or haptically, and to compose the characters into a sequence.

2. Apparatus according to claim 1 wherein the means for acoustic input comprises a microphone and the means for haptic input comprises a key means.

3. Apparatus according to claim 1 or 2 further comprising a means for converting an acoustic input and a haptic input into a common format before composition of a sequence of characters of the acoustic and haptic inputs.

4. Apparatus according to one of the preceding claims further comprising a means for output an acoustic and/or visual signal, particularly comprising a sequence of characters.

5. Apparatus according to one of the preceding claims further comprising a means for acoustically and/or visually reproducing a previously input sequence of characters.

6. Apparatus according to one of the preceding claims further comprising a speech recognition means.

7. Apparatus according to one of the preceding claims, wherein the apparatus comprises an electronic device or a control unit for controlling a plurality of electronic devices.

8. Vehicle comprising an apparatus according to one of the preceding claims.

9. Method for operating an apparatus, wherein the apparatus comprises a means for acoustic input and a means for haptic input, comprising the steps of:
activating in parallel the means for acoustic input and the means for haptic input,
inputting a sequence of characters wherein each character independently is input acoustically or haptically and wherein at least two characters are input simultaneously, and
deciding whether each of the simultaneously input characters was input acoustically or haptically, composing the characters into a sequence.

10. Method according to claim 9 further comprising the steps of converting the acoustic input and the haptic input into a common format and then composing a sequence of characters of the acoustic and haptic inputs.

11. Method according to claim 9 or 10 further comprising the step of outputting an acoustic and/or visual signal, particularly comprising a sequence of characters.

12. Computer program product directly loadable into the internal memory of a digital computer, comprising software code portions for performing the steps of the method according to one of the claims 9-11.

13. Computer program product stored on a medium readable by a digital computer, comprising computer readable program means for causing a computer to perform the steps of the method of one of the claims 9 - 11.

## Patentansprüche

1. Vorrichtung, die durch eine Eingabe einer Sequenz von Zeichen bedient wird, die eine Einrichtung für eine akustische Eingabe und eine Einrichtung für eine haptische Eingabe umfasst, wobei die Einrichtung für eine akustische Eingabe und die Einrichtung für eine haptische Eingabe parallel aktivierbar sind, so dass jedes Zeichen akustisch oder haptisch eingegeben werden kann,
**dadurch gekennzeichnet, dass**
die Vorrichtung dazu ausgebildet ist, durch eine gleichzeitige Eingabe von Zeichen mit Hilfe der Einrichtung für eine akustische Eingabe und der Einrichtung für eine haptische Eingabe bedient zu werden, und
dass eine Entscheidungseinrichtung zur Verfügung gestellt wird, die dazu ausgebildet ist, zu entscheiden, ob jedes der gleichzeitig eingegebenen Zeichen akustisch oder haptisch eingegeben worden ist, und die Zeichen in einer Sequenz zusammenzusetzen.

2. Vorrichtung gemäß Anspruch 1, in der die Einrichtung für eine akustische Eingabe ein Mikrophon umfasst, und die Einrichtung für eine haptische Eingabe eine Tasteneinrichtung umfasst.

3. Vorrichtung gemäß Anspruch 1 oder 2, weiterhin eine Einrichtung zum Umwandeln einer akustischen Eingabe und einer haptischen Eingabe in ein gemeinsames Format vor der Zusammensetzung einer Sequenz von Zeichen der akustischen und haptischen Eingaben umfassend.

4. Vorrichtung gemäß einem der vorhergehenden Ansprüche, weiterhin eine Einrichtung zur Ausgabe eines akustischen und/oder visuellen Signals umfassend, das insbesondere eine Sequenz von Zeichen umfasst.

5. Vorrichtung gemäß einem der vorhergehenden Ansprüche, weiterhin eine Einrichtung zur akustischen und/oder visuellen Wiedergabe einer zuvor eingegebenen Sequenz von Zeichen umfassend.

6. Vorrichtung gemäß einem der vorhergehenden Ansprüche, weiterhin eine Spracherkennungseinrichtung umfassend.

7. Vorrichtung gemäß einem der vorhergehenden Ansprüche, wobei die Vorrichtung eine elektronische Einrichtung oder eine Steuereinheit zum Steuern einer Mehrzahl an elektronischen Einrichtungen umfasst.

8. Fahrzeug, das eine Vorrichtung gemäß einem der vorhergehenden Ansprüche umfasst.

9. Verfahren zum Bedienen einer Vorrichtung, wobei die Vorrichtung eine Einrichtung für eine akustische Eingabe und eine Einrichtung für eine haptische Eingabe umfasst, die Schritte umfassend:
paralleles Aktivieren der Einrichtung für eine akustische Eingabe und der Einrichtung für eine haptische Eingabe,
Eingeben einer Sequenz von Zeichen, wobei jedes Zeichen unabhängig akustisch oder haptisch eingegeben wird, und wobei zumindest zwei Zeichen gleichzeitig eingegeben werden, und
Entscheiden, ob jedes der gleichzeitig eingegebenen Zeichen akustisch oder haptisch eingegeben wird,
Zusammensetzen der Zeichen in einer Sequenz.

10. Verfahren gemäß Anspruch 9, weiterhin die Schritte des Umwandelns der akustischen Eingabe und der haptischen Eingabe in ein gemeinsames Format und danach Zusammensetzen einer Sequenz von Zeichen der akustischen und haptischen Eingaben umfassend.

11. Verfahren gemäß Anspruch 9 oder 10, weiterhin den Schritt des Ausgebens eines akustischen und/oder visuellen Signals umfassend, das insbesondere eine Sequenz von Zeichen umfasst.

12. Computerprogrammprodukt, das direkt in den internen Speicher eines digitalen Computers ladbar ist, das Software-Code-Teile zum Ausführen der Schritte des Verfahrens gemäß einem der Ansprüche 9 -11 umfasst.

13. Computerprogrammprodukt, das auf einem Medium gespeichert ist, das von einem digitalen Computer lesbar ist, eine computerlesbare Programmeinrichtung umfassend, um einen Computer zu veranlassen, die Schritte des Verfahrens eines der Ansprüche 9 -11 auszuführen.

## Revendications

1. Appareil mis en fonctionnement par une entrée d'une séquence de caractère comprenant des moyens pour l'entrée acoustique et des moyens pour l'entrée haptique, les moyens d'entrée acoustique et les moyens d'entrée haptique étant activables en parallèle de sorte que chaque caractère peut être entré de manière acoustique ou haptique,
**caractérisé en ce que**
l'appareil est configuré pour être mis en fonctionnement par une entrée simultanée de caractères par les moyens d'entrée acoustique et les moyens d'entrée haptique et
**en ce que** des moyens de décision sont prévus qui sont configurés pour décider si chaque caractère de l'entrée simultanée était entré de manière acoustique ou haptique, et pour composer les caractères dans une séquence.

2. Appareil selon la revendication 1, dans lequel les moyens d'entrée acoustique comprennent un microphone et les moyens d'entrée haptique comprennent des moyens de clef.

3. Appareil selon la revendication 1 ou 2, comprenant en outre des moyens pour convertir une entrée acoustique et une entrée haptique en un format commun avant la composition d'une séquence de caractère des entrées acoustique et haptique.

4. Appareil selon l'une des revendications précédentes, comprenant en outre des moyens d'entrée d'un signal acoustique et/ou visuel, comprenant particulièrement une séquence de caractères.

5. Appareil selon l'une des revendications précédentes, comprenant en outre des moyens pour reproduire de manière acoustique et/ou visuelle une séquence d'entrée précédente de caractères.

6. Appareil selon l'une des revendications précédentes, comprenant en outre des moyens de reconnaissance vocale.

7. Appareil selon l'une des revendications précédentes, dans lequel l'appareil comprend un dispositif électronique ou une unité de commande pour commander une pluralité de dispositifs électroniques.

8. Véhicule comprenant un appareil selon l'une des revendications précédentes.

9. Procédé pour faire fonctionner un appareil, dans lequel l'appareil comprend des moyens d'entrée acoustique et des moyens d'entrée haptique, comprenant les étapes de :
activer en parallèle les moyens d'entrée acoustique et les moyens d'entrée haptique,
entrer une séquence de caractères dans laquelle chaque caractère est indépendamment entré de manière acoustique ou haptique et dans laquelle au moins deux caractères sont entrés simultanément, et
décider si chacun des caractères d'entrée simultanément était entré de manière acoustique ou haptique, composant les caractères en une séquence.

10. Procédé selon la revendication 9, comprenant en outre les étapes de convertir l'entrée acoustique et l'entrée haptique en un format commun et ensuite composer une séquence de caractères des entrées acoustique et haptique.

11. Procédé selon la revendication 9 ou 10, comprenant en outre l'étape de délivrer un signal acoustique et/ou visuel, comprenant particulièrement une séquence de caractères.

12. Produit de programme d'ordinateur directement chargeable dans la mémoire interne d'un ordinateur numérique, comprenant des parties de code de logiciel pour réaliser les étapes du procédé selon l'une des revendications 9-11.

13. Produit de programme d'ordinateur stocké dans un support lisible par un ordinateur numérique, comprenant des moyens de programme lisibles par ordinateur pour entraîner un ordinateur à réaliser les étapes du procédé d'une des revendications 9-11.
